# EUROPEAN PATENT APPLICATION

(11) **EP 4 482 061 A1**
(43) Date of publication of application: **25.12.2024**
(21) Application number: 23180105.1
(22) Date of filing: 19.06.2023
(51) Int. Cl.: H04J 14/00, H04B 10/556

(54) **A SYSTEM AND METHOD FOR TRANSMITTING DATA USING JOINT DETECTION RECEIVER**

(71) Applicant: Technische Universität München, 80333 München (DE)
(72) Inventor: Nötzel, Janis, 81671 München (DE)
(74) Representative: Lucke, Andreas

(57) **Abstract**

Disclosed is a method of transmitting data via a communication channel (12), comprising the following steps: encoding the data using a Hadamard code into a plurality of Hadamard-codewords of length M, generating a set of M coherent light beams (20) having mutually different wavelengths, phase-modulating the set of M coherent light beams (20) according to Hadamard-codewords, multiplexing said set of M phase-modulated coherent light beams (20) into a transmission end of said communication channel, at a receiving end, demultiplexing said M phase-modulated coherent light beams (20), applying wavelength shifts to said received phase-modulated light beams (20), such that all of said M phase modulated light beams (20) acquire a same detection wavelength, and coupling said M wavelength-shifted phase-modulated light beams (20) into M entry ports (38) of a joint detection receiver (JDR) (36).

## Description

### FIELD OF THE INVENTION

The present invention is in the field of data transmission. In particular, the present invention relates to a system and method for transmitting data using a joint detection receiver.

### BACKGROUND OF THE INVENTION

All optical transmission systems operate under a power limit P in Joule per second imposed on the transmitter. Therefore, when a continuous stream of signals is sent to convey information from a transmitter to a receiver, each signal can only have at best an energy of P/B Joule, where B is the total number of signals per second. Since the energy of a photon at a given wavelength is fixed, the number P/B can be translated to a number *NPPP* of photons per signal. Typically, there will be a loss in the transmission from transmitter to receiver, so that only a fraction *τ* · *NPPP* of photons per signal arrives at the receiver, with *τ* < 1.

Depending on the possibility to place amplifiers along the transmission line, the received signal can have by far less power than the signal that was sent. Unfortunately, all signal detection processes have to deal with a phenomenon known as shot noise, which limits the accuracy of photon detection, such that the signal to noise ratio can grow very large when the condition *τ* · *P*/*B* gets small. This effectively limits the total number B of signals per second that can be transmitted with a tolerable signal to noise ratio at the receiver.

### SUMMARY OF THE INVENTION

The problem underlying the invention is hence to provide a method and a system for transmitting data via a communication channel, in particular via an optical fiber link, that allows for an increased number of signals per second to be transmitted between a transmitter and a receiver along said communication channel.

This problem is solved by a method according to claim 1, a transmitter according to claim 10, a receiver according to claim 12 and a system according to claim 15. Preferable embodiments are defined in the dependent claims.

According to a first aspect of the invention, a method of transmitting data via a communication channel, and in particular an optical fiber link, is provided. The method comprises the following steps:
encoding the data using a Hadamard code into a plurality of Hadamard-codewords of length M, said Hadamard-codewords being part of a predetermined codeword alphabet,
generating a set of M coherent light beams having mutually different wavelengths,
phase-modulating the set of M coherent light beams according to said plurality of Hadamard-codewords, wherein the phase-modulation of the n-th coherent light beam of said set of coherent light beams represents the value of the n-th position of the respective Hadamard-codeword, with n = 1 ... M,
multiplexing said set of M phase-modulated coherent light beams into a transmission end of said communication channel, in particular optical fiber link, thereby allowing said light beams to propagate along the length of said communication channel towards a receiving end thereof,
at said receiving end, demultiplexing said M phase-modulated coherent light beams,
applying wavelength shifts to said received phase-modulated light beams, such that all of said M phase modulated light beams acquire a same detection wavelength, and coupling said M wavelength-shifted phase-modulated light beams into M entry ports of a joint detection receiver (JDR).

Herein, said JDR comprises said M entry ports, M detectors and a network of at least (M log₂M)/2 interconnected optical splitters, each of said optical splitters having two input ports and two output ports, wherein said input ports are connected to entry ports of said JDR or output ports of other splitters, and said output ports are connected to input ports of other splitters or to corresponding ones of the detectors. Moreover, said network of interconnected optical splitters is designed such that a set of phase-modulated light beams that is modulated according to a given one of said Hadamard-codewords of said predetermined codeword alphabet and that is applied to said entry ports of said JDR will lead to constructive interference of said individual phase-modulated light beams only or at least predominantly on a corresponding one of said detectors.

Hadamard-codewords are vectors of length M, with each vector component or entry being either +1 or -1, and wherein each two vectors are mutually orthogonal.

The key element of the JDR is the network of beam splitters that ensures that the M light beams collectively encoding one Hadamard codeword will constructively interfere on one of the detectors, thereby increasing the power of the light signal present at a respective detector, and hence, increasing the signal-to-noise ratio. This in turn allows for a larger number of signals per second that can be effectively transmitted along said transmission channel.

The network of beam splitters unravels the Hadamard codebook into a pulse-position-modulation (PPM) codebook. Mathematically, the network of interconnected optical splitters represents a unitary operation, a so-called Walsh transform, between a Hadamard code and a PPM code.

A joint detection receiver (JDR) of the general type as employed in the present invention is disclosed in US10193722B2. A further implementation can be found in EP3734862.However, this prior art does not contemplate the step of a set of generating M coherent light beams having mutually different wavelengths, which can be simultaneously transmitted on the same communication channel, and in particular on a same fiber link.

In a preferred embodiment, said M coherent light beams having the mutually different wavelengths are generated by generating an initial coherent light beam, splitting said coherent light beam into M coherent partial light beams, and applying wavelength shifts to at least M-1 of said coherent partial light beams, such that each of said coherent partial light beams acquires a wavelength different from the wavelength of any other of said M coherent partial light beams.

Herein, said phase-modulating of said M coherent partial light beams may be carried out prior to or after applying said wavelength shifts. For the purposes of the invention, it is sufficient that the coherent light beams are subjected to the appropriate phase modulation when received at the receiver.

In a preferred embodiment, the wavelength of said initial coherent light beam is the same as said detection wavelength. This allows for an easier implementation of the overall system. However, it is to be noted that this is not necessary, as long as all of said M phase modulated light beams have acquired a same detection wavelength by the time they are coupled into said M entry ports of said joint detection receiver (JDR).

While the generation of the M coherent light beams as coherent partial light beams from an initial coherent light beam is technically comparatively simple and therefore an attractive implementation, the invention is not limited to this. Instead, modern integrated optics chips allow for generating mutually coherent light beams of different wavelengths in parallel, and may also be used for embodiments of this invention. The Thorlabs MX40C is a particular embodiment of such a laser which, albeit being designed for laboratory experiment, displays the desired feature.

In a preferred embodiment, said phase modulation is a binary phase shift keying (BPSK). Herein, said preferably phase modulation is carried out such that light beams corresponding to opposite values of the corresponding Hadamard-codeword exhibit a phase shift of 180° with respect to each other when entering the entry ports of the JDR.

In a preferred embodiment, M = 2^{m}, wherein m is an integer, and wherein in particular, 3 ≤ m ≤ 6, preferably 3 ≤ m ≤ 5. Clearly, the benefits from the system increase, if the number m is higher, but such moderate numbers allow for avoiding design challenges.

In preferred embodiments, the optical channel is a fiber link formed by a single mode optical fiber. An important aspect of the invention is that already existing, i.e. legacy optical fiber links can be used, in which fiber cables comprising bundles of single mode fibers are already disposed underground or even submarine. In other words, the invention allows for using this existing optical fiber link infrastructure but increases the number of data signals that can be transmitted by employing these optical fiber links for the purposes of the invention.

In preferred embodiments, said fiber link has a length of at least 200 km, preferably at least 280 km. For such long fibers, without amplification, the loss is significant, but using the invention with e.g. m=5 significantly reduces the bit error rate of the received electronic bits already prior to forward-error correction.

In preferred embodiments, said optical channel is an optical fiber link, and the method further comprises a step of amplifying the coherent light beams while propagating through said optical fiber link using a fiber amplifier, in particular a fiber amplifier based on a rare earth doped optical fiber. This way, high data rates can be transmitted over particularly long distances.

Prior to coupling said M received phase-modulated light beams into said M entry ports of said joint detection receiver (JDR), the power of the received phase-modulated light beams is preferably equalized. Namely, when propagating the beams with different wavelengths along e.g. an optical fiber, there may be wavelength-dependent attenuation. That is to say, even if the power of the individual coherent light beams at the transmitter side are identical, they may differ at the receiver end, and thereby compromise the degree of constructive interference on a given one of the detectors. According to this embodiment, by equalizing the power of the light beams prior to the detection using the network of splitters and the interference of the light beams entering the same, the signal-to-noise ratio can be further increased. In preferred embodiments, the equalization is carried out using beam splitters for dumping excess power in said received phase-modulated light beams.

In addition or alternatively, prior to coupling said M received phase-modulated light beams into said M entry ports of said joint detection receiver (JDR), frequency-dependent delays among the received phase-modulated light beams acquired when propagating along said communication channel, in particular optical fiber link, are equalized. Again, frequency-dependent delays may occur due to dispersion when the M coherent light beams travel along an optical fiber link. In preferred embodiments, delay lines may be used for adjusting delays in said received phase-modulated light beams.

In preferred embodiments, said phase modulation is carried out using electro-optical or acousto-optical modulators.

In preferred embodiments, said step of applying wavelength shifts to said received phase-modulated light beams is carried out using frequency conversion elements in combination with sideband filters for filtering undesired sidebands generated during the frequency conversion.

A further aspect of the invention relates to a transmitter for transmitting data via a communication channel, in particular an optical fiber link, comprising:
an encoder configured for encoding the data using a Hadamard code into a plurality of Hadamard-codewords of length M, said Hadamard-codewords being part of a predetermined codeword alphabet,
a light source arrangement for generating a set of M coherent light beams having mutually different wavelengths,
a set of phase modulators for phase-modulating the set of M coherent light beams according to said plurality of Hadamard-codewords, wherein the phase-modulation of the n-th coherent light beam of said set of coherent light beams represents the value of the n-th position of the respective Hadamard-codeword, with n = 1 ... M, and
a multiplexer for multiplexing said set of phase-shifted, phase-modulated light beams into said communication channel, in particular a common fiber link.

In preferred embodiments of the transmitter, said light source arrangement is configured for generating a set of M coherent light beams having an initial wavelength, wherein a set of wavelength shifters is arranged upstream or downstream of said set of phase modulators, wherein said wavelength shifters are configured for applying wavelength shifts to said light beams, such that each of said light beams acquires a wavelength different from the wavelength of any other of said M coherent light beams.

Herein, the light source arrangement may comprise a light source for generating an initial coherent light beam and a splitter arrangement for splitting said coherent light beam into M coherent partial light beams.

A further aspect of the invention relates to a receiver for receiving data transmitted via a communication channel, in particular an optical fiber link, said receiver comprising:
a demultiplexer for demultiplexing M phase-modulated coherent light beams of mutually different wavelengths,
a set of wavelength shifters for applying wavelength shifts to said M received phase-modulated light beams, such that all of said phase modulated light beams acquire a same wavelength,
a joint detection receiver (JDR) having: M entry ports coupled for receiving said phase-modulated light beams from said set of wavelength shifters,
M detectors, and a network of at least (M log₂M)/2 interconnected optical splitters, each of said optical splitters having two input ports and two output ports, wherein said input ports are connected to entry ports of said JDR or output ports of other splitters, and said output ports are connected to input ports of other splitters or to corresponding ones of the detectors, wherein said network of interconnected optical splitters is designed such that a set of phase-modulated light beams that is modulated according to a given one of a number of Hadamard-codewords of a predetermined codeword alphabet and that is applied to said entry ports of said JDR will lead to constructive interference of said individual phase-modulated light beams only or at least predominantly on a corresponding one of said detectors.

In preferred embodiments of said receiver, said wavelength shifters are formed by frequency conversion elements in combination with sideband filters for filtering undesired sidebands generated during the frequency conversion.

Alternatively or in addition, said receiver further comprises a set of beam splitters for dumping excess power in said received phase-modulated light beams.

In preferred embodiments, the receiver further comprises delay lines for adjusting delays in said received phase-modulated light beams.

A yet further aspect of the invention relates to a system for transmitting data via a communication channel, and in particular an optical fiber link, wherein said system comprises a transmitter and a receiver according to one of the above embodiments.

### SHORT DESCRIPTION OF THE FIGURES

- Fig. 1: illustrates a system for transmitting data via a communication channel.
- Fig. 2: illustrates a network of optical splitters representing a unitary operation (Walsh transform) between a Hadamard code and a pulse-position-modulation code.

### DESCRIPTION OF THE PREFERRED EMBODIMENTS

It is to be understood that both the foregoing general description and the following description are exemplary and explanatory only and are not restrictive of the methods and devices described herein. In this application, the use of the singular may include the plural unless specifically stated otherwise. Also, the use of "or" means "and/or" where applicable or unless stated otherwise. Those of ordinary skill in the art will realize that the following description is illustrative only and is not intended to be in any way limiting. Other embodiments will readily suggest themselves to such skilled persons having the benefit of this disclosure. Reference will now be made in detail to various implementations of the example embodiments as illustrated in the accompanying drawings. The same reference signs will be used to the extent possible throughout the drawings and the following description to refer to the same or like items.

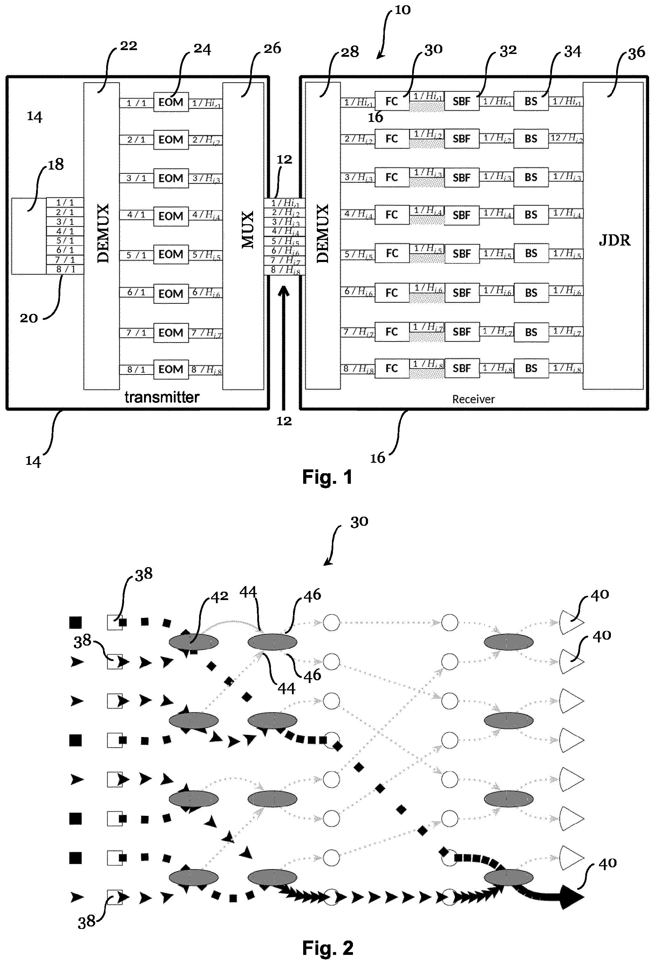

Fig. 1 shows a system 10 for transmitting data via a communication channel 12. In the embodiment shown, the communication channel 12 is an optical fiber link 12, and more precisely a single mode fiber. In the embodiment shown, the optical fiber link 12 covers a length of tens or even hundreds of kilometers. While not shown in Fig. 1, along the length of the fiber link 12, fiber amplifiers can be provided for amplifying the optical signals propagating along the same. Such fiber amplifiers may for example comprise a rare earth doped optical fiber and a corresponding pumping light source (not shown). Note that the optical fiber link 12 may be a legacy optical fiber link that has been disposed underground but is equipped with transmitters and receivers operating according to the present invention.

At a transmitting end of the optical fiber link 12, a transmitter 14 is provided, and at its receiving end (the right end in Fig. 1), a receiver 16 is provided. The transmitter 14 comprises a light source arrangement 18 for generating a set of M coherent light beams 20 having mutually different wavelengths. In the example shown, M=8, but the same setup can be devised for numbers other than 8 in a straight-forward manner.

When referring to "M coherent light beams", this does not only imply that the light beams themselves are coherent, but that there is also phase-coherence among different light beams, in that there is a phase relation between different ones of said M coherent light beams 20.

Each of the M coherent light beams 20 is represented by a pair of numbers, such as 1/1, 2/1, 3/1, ... 8/1. The first number characterizes the wavelength, where different numbers simply mean that the wavelengths are different from each other. The second number characterizes the phase of the light beam, as designated by the entry of a Hadamard code word. In the example shown, the M coherent light beams each have the same phase corresponding to the Hadamard code word entry "1", indicating that the coherent light beams are in phase with each other.

While not shown in detail in Fig. 1, the M coherent light beams of different wavelengths can be generated by first generating an initial coherent light beam, splitting the coherent light beam into M coherent partial light beams and then applying wavelength shifts to at least M-1 of said coherent partial light beams, such that each of the set coherent partial light beams acquires a wavelength different from the wavelength of any other of said M coherent partial light beams. However, in other embodiments, the M coherent light beams of different wavelengths are simultaneously generated, for example using suitable integrated optics chips.

The transmitter 14 further comprises a demultiplexer 22 for separating the M coherent light beams having mutually different wavelengths such as to introduce each of them into a corresponding phase modulator 24, which in the embodiment shown is an electro-optical modulator. The phase modulators 24 modulate the set of M coherent light beams according to a respective Hadamard-code-word, so that the phase-modulation of the n-th coherent light beam of said set of coherent light beams represents the value of the n-th position of the respective Hadamard-code-word. In Fig. 1, the value of the n-th position of the j-th Hadamard-cold-word is represented as H_{n,i}. If the value H_{n,i} is "-1", this leads to a phase shift by π (180°) as compared to a code word entry "1".

Further, a multiplexer 26 is provided for multiplexing the set of phase-modulated light beams into the optical fiber link 12.

The receiver 16 comprises a demultiplexer 28 for demultiplexing the received phase-modulated light beams to be subjected to wavelength shifts, so that all of said M phase modulated light beams acquire a same detection wavelength. The phase shift is carried out by frequency converters 30, which generate modulated light beams "1/H_{i,j}", and where the first number "1" is the same for each of the wavelength-shifted light beams, to indicate that they now have the same wavelength. The frequency converters 30 also generate side bands, which however are blocked by suitable side band filters 32.

Downstream of the side band filters 32, beam splitters 34 are provided for dumping part of the light beam, to thereby equalize the power of the received light beams. Namely, the optical fiber link 12 may subject the optical signals to wavelength-dependent attenuation, and since the M coherent light beams are transmitted with different frequencies, their power may deviate even if they had the same power at the transmitter side.

While not shown in Fig. 1, in addition to the beam splitters 34, also delay line elements can be provided for adjusting the delays in the received phase modulated light beams. The delays can for example be due to dispersion of the light beams that are transmitted at different frequencies through the optical fiber link 12.

Finally, the receiver 16 comprises a joint detection receiver 36 which is shown in more detail in Fig. 2. The joint detection receiver 36 comprises a network of splitters which unravel the BPSK code book into a pulse-position-modulation (PPM). Mathematically, the network of interconnected optical splitters represents a unitary operation, a so-called Walsh transform, between a Hadamard code and a PPM code.

As is seen in Fig. 2, the JDR 36 has M entry ports 38, M detectors 40 and a network of (M log₂M)/2 optical splitters 42. Each of the optical splitters 42 has two input ports 44 and two output ports 46. As is seen in Fig. 2, the entry ports 44 are connected to entry ports 38 of the JDR 36, or to output ports 46 of other splitters 42. The output ports 46 are connected to input ports 44 of other splitters 42, or to corresponding ones of the detectors 40.

The network of interconnected optical splitters 42 is designed such that a set of phase-modulated light beams that is modulated according to a given one of said Hadamard-codewords of the predetermined code word alphabet and that is applied to the entry ports 38 of the JDR 36 will lead to constructive interference of the individual phase-modulated light beams only, or at least predominantly, on a corresponding one of the detectors 40.

This is schematically shown in Fig. 2, where the phases of the modulated light beams are represented by a square or an arrow symbol, and where light beams having unlike symbols are phase-shifted by 180°. Due to constructive and destructive interference in the splitters 42, the light of all phase-modulated light beams accumulates on a single detector 40, the lowermost detector 40 in the representation of Fig. 2, for the given code word. If the incoming light beams were modulated according to another Hadamard-code-word, then the light would accumulate on a different one of the detectors 40. Importantly, even if the individual light signals should be rather weak, due to the accumulation on the single detector 40, they can still be reliably detected.

The skilled person will appreciate that Fig. 2 shows an idealized situation, where 100% of the power is concentrated on a single detector 40. In practical implementations, this will of course not be the case, but still there will be constructive interference "at least predominantly" on one of the detectors 40. For practical purposes, it may e. g. be sufficient if the detector receiving the strongest signal can be determined with sufficient certainty such as to allow for a tolerable bit error rate, for example 1/1000.

Note that in the embodiment shown, M=8 has been chosen for illustrative purposes, but the transmitter and receiver 14, 16 can of course be modified to allow for other numbers of M, provided that M=2^{m}, with m being an integer value. For the construction of the network of splitters for values of M other than 8, reference is made e. g. to M. Reck, A. Zeilinger, H.t J. Bernstein, and P. Bertani, "Experimental realization of any discrete unitary operator", Phys. Rev. Lett. 73, 58 - Published 4 July 1994 and W. R. Clements, P. C. Humphreys, B. J. Metcalf, W. S. Kolthammer and I. A. Walmsley, "Optimal design for universal multiport interferometers, " Optica 3, 1460-1465 (2016*).*

While the present invention has been described in terms of specific embodiments, it is understood that variations and modifications will occur to those in the art, all of which are intended as aspects of the present invention. Accordingly, only such limitations as appear in the claims should be placed on the invention.

### LIST OF REFERENCE SIGNS

- 10: system
- 12: communication channel (optical fiber link)
- 14: transmitter
- 16: receiver
- 18: light source arrangement
- 20: coherent light beam
- 22: demultiplexer
- 24: phase modulator
- 26: multiplexer
- 28: demultiplexer
- 30: frequency converter
- 32: side band filter
- 34: beam splitter
- 36: JDR
- 38: entry port
- 40: detector
- 42: optical splitter
- 44: input port
- 46: output port

## Claims

1. A method of transmitting data via a communication channel, and in particular an optical fiber link (12), comprising the following steps:
encoding the data using a Hadamard code into a plurality of Hadamard-codewords of length M, said Hadamard-codewords being part of a predetermined codeword alphabet,
generating a set of M coherent light beams (20) having mutually different wavelengths,
phase-modulating the set of M coherent light beams (20) according to said plurality of Hadamard-codewords, wherein the phase-modulation of the n-th coherent light beam (20) of said set of coherent light beams (20) represents the value of the n-th position of the respective Hadamard-codeword, with n = 1 ... M,
multiplexing said set of M phase-modulated coherent light beams (20) into a transmission end of said communication channel, in particular optical fiber link (12), thereby allowing said light beams (20) to propagate along the length of said communication channel towards a receiving end thereof,
at said receiving end, demultiplexing said M phase-modulated coherent light beams (20),
applying wavelength shifts to said received phase-modulated light beams (20), such that all of said M phase modulated light beams (20) acquire a same detection wavelength, and coupling said M wavelength-shifted phase-modulated light beams (20) into M entry ports (38) of a joint detection receiver (JDR) (36),
wherein said JDR (36) comprises said M entry ports (38), M detectors (40) and a network of at least (M log₂M)/2 interconnected optical splitters (42), each of said optical splitters (42) having two input ports (44) and two output ports (46),
wherein said input ports (44) are connected to entry ports (38) of said JDR (36) or output ports (44) of other splitters (42), and
said output ports (46) are connected to input ports (44) of other splitters (42) or to corresponding ones of the detectors (40),
wherein said network of interconnected optical splitters (42) is designed such that a set of phase-modulated light beams (20) that is modulated according to a given one of said Hadamard-codewords of said predetermined codeword alphabet and that is applied to said entry ports (38) of said JDR (36) will lead to constructive interference of said individual phase-modulated light beams (20) only or at least predominantly on a corresponding one of said detectors (40).

2. The method of claim 1, wherein said M coherent light beams (20) having the mutually different wavelengths are generated by generating an initial coherent light beam, splitting said coherent light beam into M coherent partial light beams, and applying wavelength shifts to at least M-1 of said coherent partial light beams, such that each of said coherent partial light beams acquires a wavelength different from the wavelength of any other of said M coherent partial light beams,
wherein said phase-modulating of said M coherent partial light beams is preferably carried out prior to or after applying said wavelength shifts, and/or
wherein the wavelength of said initial coherent light beam is preferably the same as said detection wavelength.

3. The method of one of the preceding claims, wherein said phase modulation is a binary phase shift keying (BPSK), wherein in particular, said phase modulation is carried out such that light beams corresponding to opposite values of the corresponding Hadamard-codeword exhibit a phase shift of 180° with respect to each other when entering the entry ports of the JDR.

4. The method of one of the preceding claims, wherein M = 2^{m}, wherein m is an integer, and wherein in particular, 3 ≤ m ≤ 6, preferably 3 ≤ m ≤ 5.

5. The method of one of the preceding claims, wherein the optical channel is a fiber link (12) formed by a single mode optical fiber, and/or
wherein said fiber link (12) has a length of at least 200 km, preferably at least 280 km, and/or
wherein said optical channel is an optical fiber link (12), the method further comprising a step of amplifying the coherent light beams while propagating through said optical fiber link (12) using a fiber amplifier, in particular a fiber amplifier based on a rare earth doped optical fiber.

6. The method of one of the preceding claims, wherein prior to coupling said M received phase-modulated light beams (20) into said M entry ports (38) of said joint detection receiver (JDR) (36), the power of the received phase-modulated light beams (20) is equalized, in particular using beam splitters (34) for dumping excess power in said received phase-modulated light beams (20).

7. The method of one of the preceding claims, wherein prior to coupling said M received phase-modulated light beams (20) into said M entry ports (38) of said joint detection receiver (JDR) (36), frequency-dependent delays among the received phase-modulated light beams acquired when propagating along said communication channel, in particular optical fiber link (12), are equalized, in particular using delay lines for adjusting delays in said received phase-modulated light beams (20).

8. The method of one of the preceding claims, wherein said phase modulation is carried out using electro-optical or a acousto-optical modulators (24).

9. The method of one of the preceding claims, wherein said step of applying wavelength shifts to said received phase-modulated light beams (20) is carried out using frequency conversion elements (30) in combination with sideband filters (32) for filtering undesired sidebands generated during the frequency conversion.

10. A transmitter (14) for transmitting data via a communication channel, in particular an optical fiber link (12), comprising:
an encoder configured for encoding the data using a Hadamard code into a plurality of Hadamard-codewords of length M, said Hadamard-codewords being part of a predetermined codeword alphabet,
a light source arrangement (18) for generating a set of M coherent light beams (20) having mutually different wavelengths,
a set of phase modulators (24) for phase-modulating the set of M coherent light beams according to said plurality of Hadamard-codewords, wherein the phase-modulation of the n-th coherent light beam of said set of coherent light beams represents the value of the n-th position of the respective Hadamard-codeword, with n = 1 ... M, and
a multiplexer (26) for multiplexing said set of phase-shifted, phase-modulated light beams (20) into said communication channel, in particular a common fiber link (12).

11. The transmitter (14) of claim 10, wherein said light source arrangement (18) is configured for generating a set of M coherent light beams (20) having an initial wavelength,
wherein a set of wavelength shifters is arranged upstream or downstream of said set of phase modulators (24), wherein said wavelength shifters are configured for applying wavelength shifts to said light beams (20), such that each of said light beams (20) acquires a wavelength different from the wavelength of any other of said M coherent light beams (20),
wherein light source arrangement (18) preferably comprises a light source for generating an initial coherent light beam and a splitter arrangement for splitting said coherent light beam into M coherent partial light beams.

12. A receiver (16) for receiving data transmitted via a communication channel, in particular an optical fiber link (12), said receiver (16) comprising:
a demultiplexer (28) for demultiplexing M phase-modulated coherent light beams (20) of mutually different wavelengths,
a set of wavelength shifters (30) for applying wavelength shifts to said M received phase-modulated light beams (20), such that all of said phase modulated light beams (20) acquire a same wavelength,
a joint detection receiver (JDR) (36) having:
M entry ports (38) coupled for receiving said phase-modulated light beams (20) from said set of wavelength shifters (30),
M detectors (40), and
a network of at least (M log₂M)/2 interconnected optical splitters (42), each of said optical splitters having two input ports (44) and two output ports (46),
wherein said input ports (44) are connected to entry ports (38) of said JDR (36) or output ports (46) of other splitters (42), and
said output ports (46) are connected to input ports (44) of other splitters (42) or to corresponding ones of the detectors (40),
wherein said network of interconnected optical splitters (42) is designed such that a set of phase-modulated light beams (20) that is modulated according to a given one of a number of Hadamard-codewords of a predetermined codeword alphabet and that is applied to said entry ports (38) of said JDR (36) will lead to constructive interference of said individual phase-modulated light beams (20) only or at least predominantly on a corresponding one of said detectors (40).

13. The receiver (16) of claim 12, wherein said wavelength shifters (30) are formed by frequency conversion elements in combination with sideband filters (32) for filtering undesired sidebands generated during the frequency conversion.

14. The receiver (16) of claim 12 or 13, further comprising a set of beam splitters (34) for dumping excess power in said received phase-modulated light beams (20), and/or further comprising delay lines for adjusting delays in said received phase-modulated light beams (20).

15. A system (10) for transmitting data via a communication channel, and in particular an optical fiber link (12), wherein said system comprises a transmitter (14) according to one of claims 10 to 11 and a receiver (16) according to one of claims 12 to 14.
